# EUROPÄISCHE PATENTSCHRIFT

(11) **EP 0 537 376 B1**
(45) Veröffentlichungstag und Bekanntmachung des Hinweises auf die Patenterteilung: **04.10.1995**
(21) Anmeldenummer: 91117659.2
(22) Anmeldetag: 16.10.1991
(51) Int. Cl.: B23B 5/28

(54) **Verfahren zur zerspanenden Bearbeitung eines über Reibrollen angetriebenen Radsatzes**
Process for the chip forming machining of a wheelset driven by friction rolls
Procédé pour l'usinage par enlèvement de copeaux d'un essieux entraîné par des galets de friction

(43) Veröffentlichungstag der Anmeldung: 21.04.1993
(73) Patentinhaber: Wilhelm Hegenscheidt Gesellschaft mbH, D-41804 Erkelenz (DE)
(72) Erfinder: Ligacz, Herbert, W-5140 Erkelenz (DE)
(74) Vertreter: Mayer-Pohske, Joachim-Wolfgang Rechtsanwälte Dr. Dettmeier & Partner

(56) Entgegenhaltungen:
- DE-A- 2 608 940
- DE-A- 3 931 747
- DE-C- 878 587
- DE-C- 4 001 793
- DE-U- 1 868 149
- DE-U- 9 109 904

## Beschreibung

Die Erfindung betrifft ein Verfahren zur zerspanenden Bearbeitung eines in Zentriermitteln aufgenommenen und über an der Umfangsfläche eines Rades angelegte Reibrollen angetriebenen Radsatzes, wobei der Radsatz von mindestens einer an die Lauffläche mindestens eines Rades eines Radsatzes mit Anlagekraft angelegten Reibrolle, die unter Anlagekraft radialen Lageveränderungen der jeweils momentanen Kontaktfläche folgen kann, angetrieben und/oder abgestützt wird (DE-C-4 001 793).

In der nachfolgenden Beschreibung soll der Begriff "Reibrolle" sowohl solche Reibrollen bezeichnen, mit denen ein Rad eines Radsatzes angetrieben wird, als auch solche Rollen, auf denen sich das Rad eines Radsatzes abstützt.

Radsatzdrehmaschinen, auf denen Radsätze mit Reibrollen angetrieben werden, sind bekannt geworden aus der DE-OS 3931747 oder der DE-PS 3809250. Für eine Reprofilierung wird ein Radsatz mittels an die Lauffläche eines Rades angelegte Reibrollen, die radialen Lageveränderungen der Lauffläche folgen können, angetrieben. Hierbei wird der Werkstoff unter den Rollen weggedreht, bis zu einer Übergangszone. Bei der weiteren Zerspanung kommt dann der bereits reprofilierte Teil der Lauffläche zur Anlage an die Reibrolle, so daß dort weiter angetrieben werden kann. Dieser Übergang ist bekannt und bewährt und kann z.B. entnommen werden aus der DE-PS 4001793, Figuren 3, 6, 8, 10 und 12 mit zugehörigen Beschreibungsteilen. Mit diesem Verfahren gelingt es, einen durchgehenden, unterbrechungsfreien Schnitt durchzuführen. Die Erfahrung zeigt jedoch, daß von solchen Reibrollen häufig Drehspäne in die reprofilierte Oberfläche der Räder eingewalzt werden und dort unzulässige Markierungen erzeugen.

Der Erfindung liegt somit die Aufgabe zugrunde, ein Verfahren der eingangs beschriebenen Art vorzuschlagen, mit dem ein Einwalzen von Spänen in den schon reprofilierten Bereich vermieden werden kann.

Erfindungsgemäß ist diese Aufgabe dadurch gelöst, daß während dessen das Radprofil mit Hilfe mindestens eines Zerspanungswerkzeuges zunächst außerhalb eines für eine Anlage zwischen dieser Reibrolle und der Lauffläche vorgesehenen Anlagebereiches und nachfolgend in diesem Anlagebereich durch die zerspanende Bearbeitung erzeugt wird. Es werden somit die Profilbereiche außerhalb eines bestimmten Anlagebereiches zwischen der Reibrolle und der Lauffläche eines Rades eines Radsatzes fertig bearbeitet und damit dort die neue Profilkontur hergestellt. Während dieses Zerspanungsvorganges liegen somit die Reibrollen an einem Laufflächenbereich an, bei dem eine Einwalzung von Spänen unschädlich ist. Dieser Laufflächenbereich wird im Verlaufe der Reprofilierung vollständig überdreht. Gleichzeitig wird hierbei die Umfangsfläche der Reibrolle bis zum wirklich letzten Augenblick auf einen der jeweiligen Spantiefe entsprechenden Abstand zum fertig reprofilierten Profil gehalten, so daß Späne, die in diesem Bereich eindringen, ohne eingewalzt zu werden hindurchfallen können.

Nach einer Ausgestaltung der Erfindung ist vorgeschlagen, daß zunächst der Anlagebereich vorbearbeitet wird. Durch diese Vorbearbeitung des Anlagebereiches wird dort ein metallisch sauberer Anlagebereich geschaffen, der eine höhere Leistungsübertragung erlaubt. Außerdem wird hierdurch eine zur Drehachse konzantrische Fläche für die Reibrollen geschaffen, so daß Radialbewegungen der Reibrollen während des Antriebs vermieden werden. Hierdurch können gleichzeitig unerwünschte und stets wechselnde Radialkräfte vermieden werden, die aus der Hysterese der Kraftmittel stammen, mit denen die Anlagekraft für die Reibrollen erzeugt wird. Es besteht nun zwar noch die Gefahr, daß in dem so erzeugten Anlegebereich Späne eingewalzt werden. Jedoch ist dies ohne Bedeutung, weil es sich hierbei nur um einen vorbearbeiteten Anlagebereich handelt, der später mit der Fertigstellung der Reprofilierung vollständig weggespant wird. Evtl. Einwalzungen werden damit ebenfalls beseitigt.

Nach einer weiteren Ausgestaltung dar Erfindung wird vorgeschlagen, daß bei der Reprofilierung das Werkzeug am Spurkranz beginnend in einem Zug, ohne Unterbrechung, über die Lauffläche bis zur äußeren Radreifenstirnfläche eines Rades geführt wird. Dies ist sowohl bei vorbearbeitetem als auch bei nicht vorbearbeitetem Anlagebereich möglich. Das Profil zwischen Spurkranz und äußerer Radreifenstirnfläche des Rades, ebenso wie das Profil zwischen innerer Radreifenstirnfläche des Rades und äußerer Radreifenstirnfläche des Rades kann mit dieser Methode in einem einzigen durchgehenden Schnitt fertig bearbeitet werden. In Abwandlung hiervon ist es aber auch möglich, mit der zerspanenden Bearbeitung an der der äußeren Spurkranzflanke zugewandten Grenze des Anlagebereiches zu beginnen und das Werkzeug in einem geraden oder schrägen Einstich so weit radial einwärts zu fahren, wie notwendig ist, um das Neuprofil herzustellen. Aus dieser Position heraus wird das Werkzeug zunächst in Richtung Spurkranz gefahren, um in diesem Bereich das Profil bis zur inneren Radreifenstirnfläche hin fertigzuschneiden. Sodann wird das Werkzeug zurückgefahren und so in Position gebracht, daß vom Anfangspunkt aus auf der Profillinie des Neuprofils zur äußeren Radreifenstirnfläche hingefahren wird, wodurch unter der Reibrolle der Anlagebereich weggedreht und das Neuprofil hergestellt wird. In jedem Fall wird ein Einwalzen von Spänen in das durch die Reprofilierung hergestellte Neuprofil verhindert.

Schließlich ist nach der Erfindung noch vorgschlagen, daß während der Bearbeitung des Anlagebereiches die Anlagekraft der zugeordneten Reibrolle entsprechend der Verringerung der notwendigen Antriebsleistung ebenfalls verringert wird. Insbesondere dann, wenn der Anlagebereich bereits vorbearbeitet wurde, ist dort nur eine verringerte Spantiefe zur Wiederherstellung des Neuprofils erforderlich. Entsprechend geringer ist der Leistungsbedarf und entsprechend geringer kann die Anlagekraft der Reibrollen gehalten werden.

Die Erfindung soll nun anhand der beigefügten Zeichnungen näher erläutert werden. Es zeigen:
- Figur 1: Ein Rad mit einer an einem Verschleißprofil angelegten Reibrolle.
- Figur 2: Ein Rad mit bis auf den Anlagebereich zwischen Reibrolle und Lauffläche des Rades reprofliertem Profil.
- Figur 3: Ein Rad mit bis auf den Anlagebereich zwischen Reibrolle und Lauffläche des Rades reprofiliertem Profil und mit einer an eine vorgedrehte Anlagefläche angelegten Reibrolle und einem positionierten Bearbeitungswerkzeug.
- Figur 4: Den letzten Spanungsvorgang unter einer Reibrolle

Zum einfacheren Verständnis sind Reibrolle und Bearbeitungswerkzeug in ein und dieselbe Ebene gelegt.

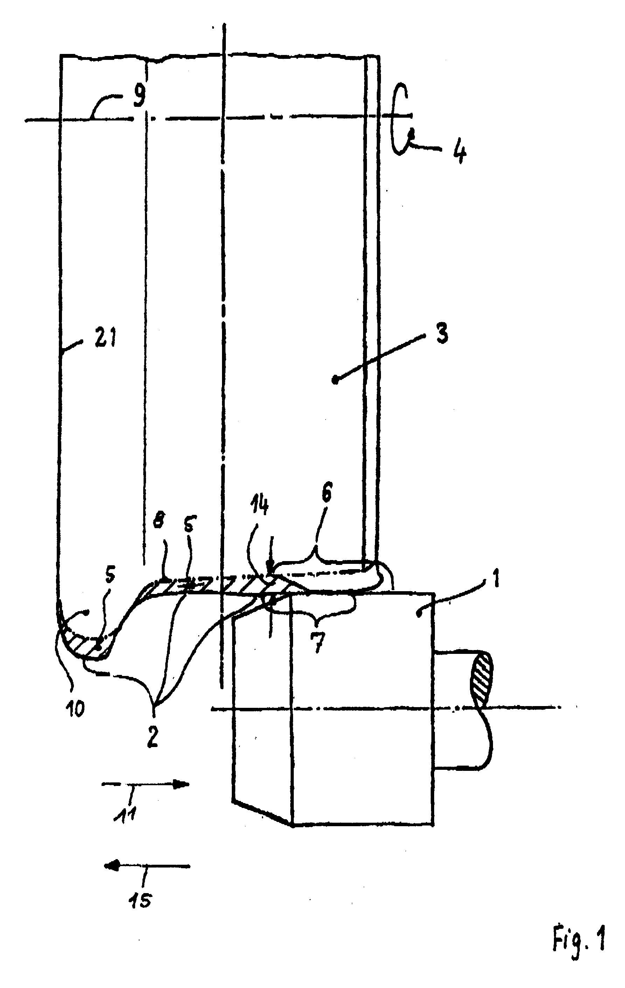

In Figur 1 ist eine Reibrolle 1 an das Verschleißprofil 2 eines Rades 3 eines nicht näher dargestellten Radsatzes angelegt und das Rad 3 wird während der Bearbeitung von der Reibrolle 1 in der durch den Pfeil 4 angegebenen Drehrichtung um die Rotationsachse 9 des Rades 3 angetrieben. Hierbei soll zunächst der schraffierte Bereich 5 des Rades 3 zerspant werden. Hierbei bleibt der nichtschraffierte Bereich, der den Anlagebereich 6 zwischen Reibrolle 1 und Lauffläche 7 des Rades 3 darstellt, unzerspant. Im schraffierten Bereich 5 hingegen. wird bereits das neue Profil 8 korrekt erzeugt. Wenn während dieser Zerspanung des Bereiches 5 Späne in den Anlagebereich 6 geraten und dort eingewalzt werden, so ist dies vollständig unschädlich. Diese Späne werden ja in einen nach nicht reprofilierten Bereich, der später noch zerspant wird, eingewalzt und damit mit der späteren Zerspanung entfernt, wie noch zu beschreiben ist. Die Breite des Anlagebereiches 6 kann grundsätzlich frei gewählt werden. Die Breite muß lediglich für die zu übertragende Leistung ausreichend sein.

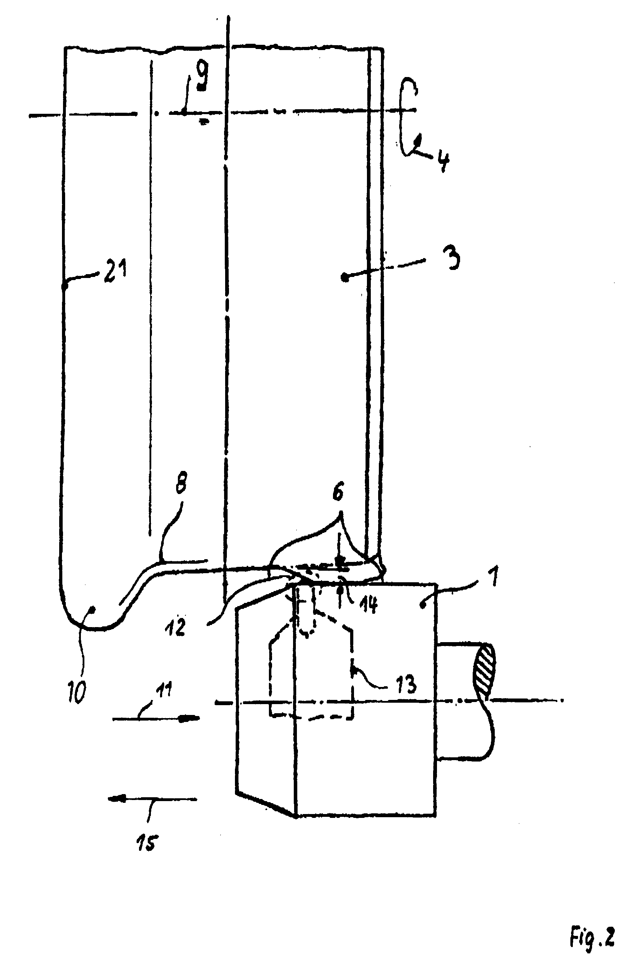

Figur 2 zeigt ein Rad 3, an dem das vorgesehene neue Profil 8 außerhalb des Anlagebereiches 6 bereits fertig hergestellt ist. Hierbei kann die Zerspanung zur Herstellung dieses neuen Profils 8 außerhalb des Anlagebereiches 6 im Bereich des Spurkranzes 10 bzw. an der inneren Radreifenstirnfläche 21 beginnen und in der mit dem Pfeil 11 angegebenen Hauptrichtung ablaufen, Diese Zerspanung kann aber auch etwa angenähert im Endbereich 12 des Anlagebereiches 6 beginnen, in dem mit einem Bearbeitungswerkzeug 13 im radial oder auch schräg geführten Einstich bis auf die Kontur des neuen Profils 8 gefahren und hierzu die Spantiefe 14 erreicht wird, worauf dann mit Vorschuh in der mit dem Pfeil 15 angegebenen Hauptrichtung entlang der Kontur des neuen Profils 8 zerspant wird.

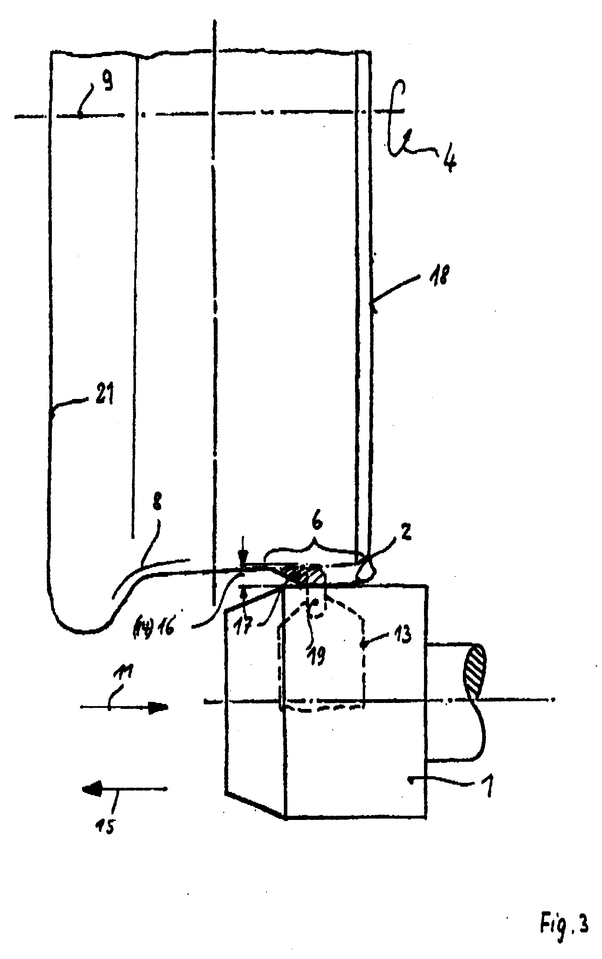

In Figur 3 ist die Zerspanung des Verschleißprofils 2 außerhalb des Anlagebereiches 6 schon abgeschlossen und in diesem genannten Bereich das neue Profil 8 bereits hergestellt. Während dieser Zerspanung konnten in die schon hergestellten Bereiche des neuen Profils 8 keine Späne eingewalzt werden, weil die Reibrolle 1 diese Bereiche nicht berührt. Nachfolgend erfolgt nun die Zerspanung im Anlagebereich 6. Es hat dann in diesem Anlagebereich 6 die Reibrolle 1 bis zum vorgesehenen neuen Profil 8 in radialer Richtung den Abstand 16, welcher der Spantiefe 14 entspricht. Geraten jetzt beim Zerspanen Späne in den in Figur 3 schraffiert dargestellten Bereich 17, von dem angenommen werden soll, daß er inzwischen während der Reprofilierung bereits mit einem Vorschub in der Hauptrichtung, die durch den Pfeil 11 angegeben wird, zerspant wurde, dann werden diese Späne nicht eingwalzt, weil die Reibrolle 1 keinen Kontakt in diesem Bereich mit dem neuen Profil 8 hat. Die Späne fallen unschädlich durch die Lücke mit dem Abstand 16 hindurch.

In Figur 3 ist der soeben beschriebene letzte Spanungsvorgang so dargestellt, daß die Vorschubrichtung der durch den Pfeil 11 angegebenen Hauptrichtung entspricht. Der Spanungsvorgang kann aber auch in umgekehrter Richtung erfolgen.

Mit fortschreitender Zerspanung nähert sich im Falle einer durch den Pfeil 11 angegebenen Hauptvorschubrichtung das Bearbeitungswerkzeug 13 der äußeren Radreifenstirnfläche 18 und der Anlagebereich 6 wird in axialer Richtung immer kürzer. Auch hier sind natürlich Späne, die in diesen Anlagebereich eingewalzt werden, unschädlich, weil die beim Einwalzen entstandenen Kerben mit dem überflüssigen Werkstoff abgespant werden.

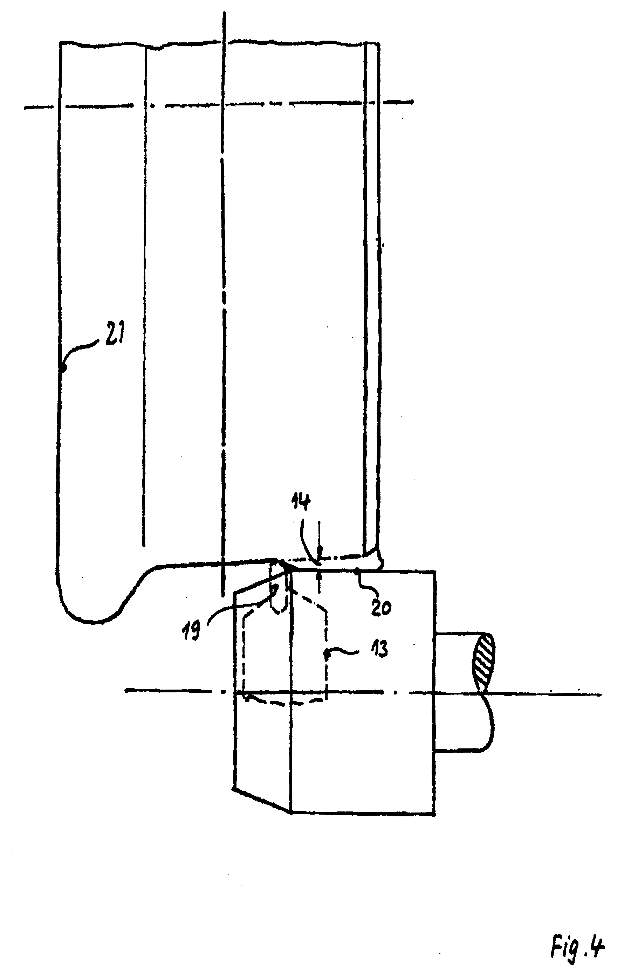

In Figur 4 ist der Anlagebereich zwischen der Mantelfläche 20 der Reibrolle und der entsprechenden Umfangsfläche des Rades vorgedreht worden. Damit kommt in diesem Bereich die Mantelfläche 20 der Reibrolle 1 mit einer metallisch sauberen Fläche des Eisenbahnrades in Kontakt und kann dadurch höchstmögliche Leistung übertragen. Unter diesen Voraussetzungen gelingt es in der Regal, den in Figur 1 schraffierten Bereich 5 mit einem einzigen Schnitt und damit ohne Schnittaufteilung fertig zu bearbeiten. Die hierzu erforderliche Spantiefe kann sofort zerspant werden und es ist nicht erforderlich, mehrere Schnitte mit kleineren Spantiefen durchzuführen. Nachdem dies geschehen ist, kann der gen. Anlagebereich ebenfalls zerspant werden, so daß ein vollständig neues Profil 8 ohne die Gefahr des Einwalzens von Spänen hergestellt werden kann. Damit kann auch gleichzeitig die maximale Zerspanungsleistung der Schneidplatte 19 ausgeschöpft werden.

### Liste der verwendeten Bezugzeichen

- 1: Reibrolle
- 2: Verschleißprofil
- 3: Rad
- 4: Pfeil
- 5: Bereich
- 6: Anlagebereich
- 7: Lauffläche
- 8: Profil
- 9: Rotationsachse
- 10: Spurkranz
- 11: Pfeil
- 12: Endbereich
- 13: Bearbeitungswerkzeug
- 14: Spantiefe
- 15: Pfeil
- 16: Abstand
- 17: Bereich
- 18: Radreifenstirnfläche
- 19: Schneidplatte
- 20: Mantelfläche
- 21: Radreifenstirnfläche

## Patentansprüche

1. Verfahren zur zerspanenden Bearbeitung eines in Zentriermitteln aufgenommenen und über an dar Umfangsfläche eines Rades (3) angelegte Reibrollen (1) angetriebenen Radsatzes, wobei der Radsatz von mindestens einer an die Lauffläche (7) mindestens eines Rades (3) eines Radsatzes mit Anlagekraft angelegten Reibrolle (1), die unter Anlagekraft radialen Lageveränderungen dar jeweils momentanan Kontaktfläche folgen kann, angetrieben und/oder abgestützt wird, dadurch gekennzeichnet, daß während dessen das Radprofil (8) mit Hilfe mindestens eines Zerspanungswerkzeuges zunächst außerhalb eines für eine Anlage zwischen dieser Reibrolle (1) und der Lauffläche (7) vorgesehenen Anlagebereiches (6) und nachfolgend in diesem Anlagebereich (6) durch die zerspanende Bearbeitung erzeugt wird.

2. Verfahren nach Anspruch 1, dadurch gekennzeichnet, daß zunächst der Anlagebereich (6) vorbearbeitet wird.

3. Verfahren nach einem Ansprüche 1 und 2, dadurch gekennzeichnet, daß bei der Reprofilierung das Werkzeug (13,19) am Spurkranz (10) beginnend in einem Zug, ohne Unterbrechung, über die Lauffläche (7) bis zur äußeren Radreifenstirnfläche (18) eines Rades (3) geführt wird.

4. Verfahren nach Anspruch 2, dadurch gekennzeichnet, daß während der Bearbeitung des Anlagebereiches (6) die Anlagekraft der zugeordneten Reibrolle (1) entsprechend der Verringerung der notwendigen Antriebsleistung ebenfalls verringert wird.

## Claims

1. Process for the chip-forming machining of a wheel set received in centering means and driven by friction rollers (1) contacting the peripheral surface of a wheel (3), wherein the wheelset is driven and/or supported by at least one friction roller (1) set with contact force against the running surface (7) of at least one wheel (3) of a wheelset, said friction roller below contact force being able to follow radial positional changes of the instantaneous contact surface at any time,
characterised in that during this the wheel profile (8) is produced, with the aid of at least one chip-forming tool, by chip-forming machining, initially outside a contact region (6) provided for a contact between this friction roller (1) and the running surface (7) and subsequently in this contact region (6).

2. Process according to claim 1, characterised in that initially the contact region (6) is roughly machined.

3. Process according to one of claims 1 and 2, characterised in that in the reprofiling the tool (13, 19) is guided, in one pass without interruption, on the flange (10) to start with, and then over the running surface (7) as far as the outer wheel rim end face (18) of a wheel (3).

4. Process according to claim 2, characterised in that during the machining of the contact region (6) the contact force of the associated friction roller (1) is likewise reduced corresponding to the reduction of the drive power needed.

## Revendications

1. Procédé pour l'usinage par enlèvement de copeaux d'un essieu monté logé dans des moyens de centrage et entraîné par des galets de friction (1) appliqués contre la surface périphérique d'une roue (3), étant précisé que l'essieu monté est entraîné et/ou supporté par au moins un galet de friction (1) appliqué par une force d'application contre la surface de roulement (7) d'au moins une roue (3) d'un essieu monté, lequel galet de friction (1) peut suivre, sous l'action de la force d'application, des changements de position radiaux de la surface de contact du moment, caractérisé en ce qu'on réalise pendant ce temps le profil de roue (8) par usinage par enlèvement de copeaux à l'aide d'au moins un outil d'enlèvement de copeaux, tout d'abord à l'extérieur d'une zone d'application (6) prévue pour une application entre ledit galet de friction (1) et la surface de roulement (7), puis dans cette zone d'application (6).

2. Procédé selon la revendication 1, caractérisé en ce qu'on commence par pré-usiner la zone d'application (6).

3. Procédé selon l'une des revendications 1 et 2, caractérisé en ce que lors du reprofilage, l'outil (13, 19), en commençant par le boudin (10), est guidé d'une traite, sans interruption, sur la surface de roulement (7) jusqu'à la surface frontale de bandage extérieure (18) d'une roue (3).

4. Procédé selon la revendication 2, caractérisé en ce que pendant l'usinage de la zone d'application (6), la force d'application du galet de friction associé (1) est également réduite en fonction de la réduction de la puissance d'entraînement nécessaire.
